# EUROPEAN PATENT APPLICATION

(11) **EP 2 871 162 A1**
(43) Date of publication of application: **13.05.2015**
(21) Application number: 13191900.3
(22) Date of filing: 07.11.2013
(51) Int. Cl.: C02F 1/04

(54) **Process for removing contaminants from an aqueous stream**

(71) Applicant: SHELL INTERNATIONAL RESEARCH MAATSCHAPPIJ B.V., 2596 HR Den Haag (NL)
(72) Inventor: The designation of the inventor has not yet been filed
(74) Representative: Matthezing, Robert Maarten

(57) **Abstract**

The invention provides a process for removing contaminants from an aqueous stream comprising the steps of:
(a) providing the aqueous stream which comprises contaminants;
(b) subjecting the aqueous stream to a separation treatment in a separation unit to obtain a contaminants-rich first vapour fraction and a contaminants-lean first liquid fraction;
(c) subjecting at least part of the contaminants-rich first vapour fraction as obtained in step (b) to a first condensation treatment to obtain a second vapour fraction which comprises contaminants and a second liquid fraction which comprises contaminants;
(d) recovering at least part of the contaminants-lean first liquid fraction as obtained in step (b) from the separation unit; and
(e) recycling at least part of the second liquid fraction which comprises contaminants as obtained in step (c) to step (b).

## Description

### Field of the Invention

The present invention relates to a process for removing contaminants from an aqueous stream.

### Background of the Invention

Many waste water streams such as those generated by chemical plants, municipal waste and waste water plants, food manufacturing facilities, industrial factories, petroleum refineries and animal farms typically contain high concentrations of organic compounds that need to be removed from such waste streams in view of increasing environmental constraints. Such organic compounds include hydrocarbons, alcohols and oxygenates. In environmental chemistry, the chemical oxygen demand (COD) test is commonly used to indirectly measure the amount of such organic compounds in water, whereby COD is usually expressed in milligrams per litre (mg/l) or ppm.

Organic compounds that contribute to COD can be removed from waste water streams by means of physical, chemical and/or biological processes. An often used process to remove contaminants such as COD from waste water streams is to subject the waste water streams to a separation step, usually a distillation step, in which the COD contaminants are stripped off water in a distillation column and separately recovered. Such distillation processes leave, however, much room for improvement in terms of separation efficiency.

Object of the present invention is to provide an improved process for removing contaminants such as COD from an aqueous stream.

### Summary of the invention

It has now been found that this can be established by using a particular multi-stage separation process.

Accordingly, the present invention relates to a process for removing contaminants from an aqueous stream comprising the steps of:
(a) providing the aqueous stream which comprises contaminants;
(b) subjecting the aqueous stream to a separation treatment in a separation unit to obtain a contaminants-rich first vapour fraction and a contaminants-lean first liquid fraction;
(c) subjecting at least part of the contaminants-rich first vapour fraction as obtained in step (b) to a first condensation treatment to obtain a second vapour fraction which comprises contaminants and a second liquid fraction which comprises contaminants;
(d) recovering at least part of the contaminants-lean first liquid fraction as obtained in step (b) from the separation unit; and
(e) recycling at least part of the second liquid fraction which comprises contaminants as obtained in step (c) to step (b).

In accordance with the present invention contaminants such as COD can be removed from an aqueous stream such a petroleum process stream in a highly efficient manner.

### Detailed description of the invention

In step (a) of the present process, an aqueous stream is provided which comprises contaminants. The aqueous stream in particularly contains organic contaminants that contribute to COD. Such organic compounds include for instance oxygenates and hydrocarbons. Oxygenates usually include alcohols having more than 3 carbon atoms, aldehydes having more than 2 carbon atoms, ketones having more than 2 carbon atoms, ethers having at least 2 carbon atoms and carboxylic acids having more than 3 carbon atoms, whereas hydrocarbons that are usually present in petroleum process streams include compounds such as benzene, alkylbenzenes, n-alkanes and polycyclic aromatic hydrocarbons.

Oxygenates may be present in the aqueous stream to be treated in an amount of 0.000001-50 wt%, based on the total weight of the aqueous stream.

Hydrocarbons may be present in the aqueous stream to be treated in an amount of 0.000001-50 wt%, based on the total weight of the aqueous stream.

Suitably, the aqueous stream from which the contaminants are to be removed in accordance with the present invention is a process water or waste water stream. The process water or waste water stream may be any process or waste water stream. Preferably, however, the process water or waste water stream is derived from a chemical plant or a petroleum refinery. More preferably, the aqueous stream from which contaminants such as oxygenates and hydrocarbons are to be removed is process water or waste water stream as obtained from a Fischer-Tropsch process in which gaseous components are converted into liquid hydrocarbons.

In step (b), the aqueous stream, is subjected to a separation treatment in a separation unit to obtain a contaminants-rich first vapour fraction and a contaminants-rich first vapour fraction. Preferably, the separation unit is a distillation unit. The aqueous stream from which the contaminants are to be removed is suitably introduced into a distillation column. In the distillation column the aqueous stream will flow upwards through the distillation unit and during the distillation contaminants such as oxygenates and hydrocarbons will be stripped from the aqueous stream to form the first contaminants-rich first vapour fraction which is suitably withdrawn from an upper part of the distillation column. The remaining contaminants-lean first liquid fraction can suitably be recovered from a lower part of the distillation unit. A variety of distillation units can be used in accordance with the present invention.

The separation treatment in step (b) is suitably be carried out at a temperature in the range of 20-200 °C. Suitably, the separation treatment in step (b) is carried out at a pressure in the range of from 1.5-3.0 bara. Preferably, step (b) is carried out at a temperature in the range of from 100-105 °C and a pressure in the range of from 1.9-2.4 bara.

In step (c), at least part of the contaminants-rich first vapour fraction as obtained in step (b) is subjected to a first condensation treatment to obtain a second vapour fraction which comprises contaminants and a second liquid fraction which comprises contaminants. The first condensation treatment can be carried out in a variety of condensation units.

In step (c), preferably the entire contaminants-rich first vapour fraction as obtained in step (b) is subjected to the first condensation treatment.

The first condensation treatment in step (c) is suitably be carried out at a temperature in the range of 20-200 °C. Suitably, the first condensation treatment in step (c) is carried out at a pressure in the range of from 1.5-3.0 bara.

Preferably, the first condensation in step (c) is carried out at a temperature in the range of from 100-105 °C and a pressure in the range of from 1.9-2.4 bara.

In step (d), at least part of the contaminants-lean first liquid fraction as obtained in step (b) is recovered from the separation unit. Suitably, the recovered contaminants-lean first liquid fraction contains contaminants that contribute to COD in an amount of 1200-1800 ppm.

Suitably, the entire contaminants-lean first liquid fraction as recovered in step (d) is recycled to step (b).

In step (e), at least part of the second liquid fraction which comprises contaminants as obtained in step (c) is recycled to step (b). Preferably, at least 75 wt% of the second liquid fraction is recycled to step (b). More preferably, at least 90 wt% of the second liquid fraction is recycled to step (b). Most preferably, the entire second liquid fraction is recycled to step (b).

In an attractive embodiment of the present invention at least part of the second vapour fraction which comprises contaminants is subjected to a second condensation treatment to obtain a third vapour fraction which comprises contaminants and a third liquid fraction which comprises contaminants.

The second condensation treatment can be carried out in a variety of condensation units.

Preferably, the entire third vapour fraction as obtained in step (b) is subjected to the first condensation treatment.

The second condensation treatment in step (c) is suitably be carried out at a temperature in the range of 20-200 °C. Suitably, the second condensation treatment in step (c) is carried out at a pressure in the range of from 1.2-2.5 bara. Preferably, the second condensation treatment is carried out at a temperature in the range of from 70-80 °C and a pressure in the range of from 1.6-1.9 bara.

Preferably, the first condensation treatment is carried out at a higher temperature than the second condensation treatment.

The present invention also relates to a process for removing contaminants from an aqueous stream comprising the steps of:
(a) providing the aqueous stream which comprises contaminants;
(b) subjecting the aqueous stream to a separation treatment in a separation unit to obtain a contaminants-rich first vapour fraction and a contaminants-lean first liquid fraction;
(c) subjecting at least part of the contaminants-rich first vapour fraction as obtained in step (b) to a first condensation treatment to obtain a second vapour fraction which comprises contaminants and a second liquid fraction which comprises contaminants;
(d) recovering at least part of the contaminants-lean first liquid fraction as obtained in step (b) from the separation unit;
(e) recycling at least part of the second liquid fraction which comprises contaminants as obtained in step (c) to step (b); and
(f) subjecting at least part of the second vapour fraction which comprises contaminants to a second condensation treatment to obtain a third vapour fraction which comprises contaminants and a third liquid fraction which comprises contaminants.

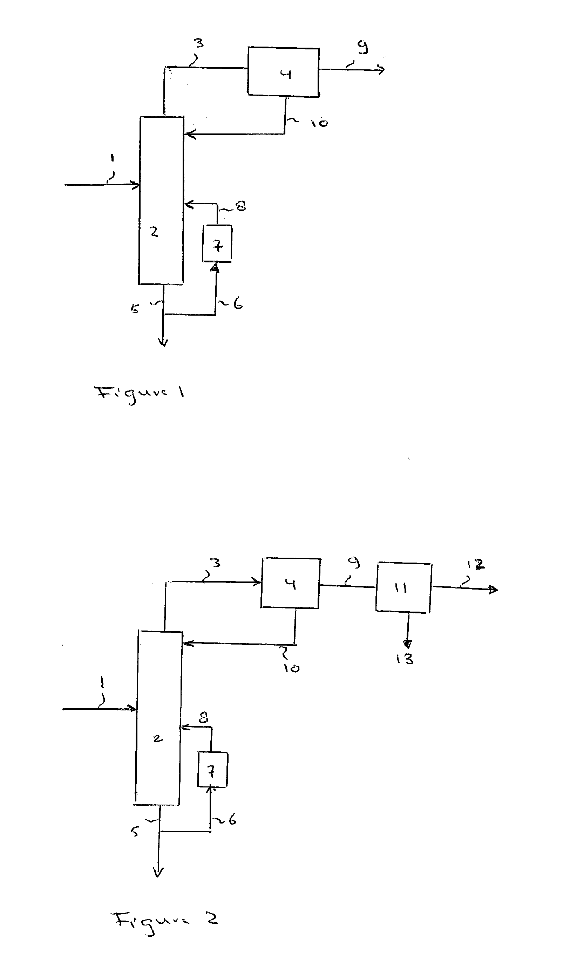

## Claims

1. Process for removing contaminants from an aqueous stream comprising the steps of:
(a) providing the aqueous stream which comprises contaminants;
(b) subjecting the aqueous stream to a separation treatment in a separation unit to obtain a contaminants-rich first vapour fraction and a contaminants-lean first liquid fraction;
(c) subjecting at least part of the contaminants-rich first vapour fraction as obtained in step (b) to a first condensation treatment to obtain a second vapour fraction which comprises contaminants and a second liquid fraction which comprises contaminants;
(d) recovering at least part of the contaminants-lean first liquid fraction as obtained in step (b) from the separation unit; and
(e) recycling at least part of the second liquid fraction which comprises contaminants as obtained in step (c) to step (b).

2. Process according to claim 1, wherein at least part of the contaminants-lean first liquid fraction as recovered in step (d) is recycled to step (b).

3. Process according to claim 1 or 2, wherein at least part of the second vapour fraction which comprises contaminants is subjected to a second condensation treatment to obtain a third vapour fraction which comprises contaminants and a third liquid fraction which comprises contaminants.

4. Process according to any one of claims 1-3, wherein at least 75 wt% of the second liquid fraction which comprises contaminants as obtained in step (c) is recycled to step (b).

5. Process according to any one of claims 1-4, wherein the entire second liquid fraction which comprises contaminants as obtained in step (c) is recycled to step (b).

6. Process according to any one of claims 1-5, wherein 100 wt% of the contaminants-lean first liquid fraction as recovered in step (d) is recycled to step (b).

7. Process according to any one of claims 1-6, wherein the aqueous stream is a process water or waste water stream.

8. Process according to any one of claims 1-7, wherein the aqueous stream is derived from a Fischer-Tropsch process.

9. Process according to any one of claims 1-8, wherein the contaminants include oxygenates and hydrocarbons.

10. Process according to any one of claims 1-9, wherein step (b) is carried out at a temperature in the range of from 100-105 °C and a pressure in the range of from 1.9-2.4 bara.

11. Process according to any one of claims 1-10, wherein the first condensation in step (c) is carried out at a temperature in the range of from 100-105 °C and a pressure in the range of from 1.9-2.4 bara.

12. Process according to any one of claims 3-11, wherein the second condensation treatment is carried out at a temperature in the range of from 70-80 °C and a pressure in the range of from 1.6-1.9 bara.

13. Process according to any one of claims 3-12, wherein the first condensation treatment is carried out at a higher temperature than the second condensation treatment.

14. Process according to any one of claims 1-13, wherein the contaminants-lean first liquid fraction as recovered in step (d) contains contaminants that contribute to COD in an amount of 1200-1800 ppm.
